# EUROPÄISCHE PATENTSCHRIFT

(11) **EP 2 923 823 B1**
(45) Veröffentlichungstag und Bekanntmachung des Hinweises auf die Patenterteilung: **14.08.2019**
(21) Anmeldenummer: 15160883.3
(22) Anmeldetag: 25.03.2015
(51) Int. Cl.: B29C 64/106, B29C 64/40, B33Y 80/00, B29C 64/112, B33Y 10/00, B33Y 30/00, B33Y 40/00

(54) **FORMKÖRPER UND VERFAHREN ZU DESSEN HERSTELLUNG**
MOULDING BODY AND METHOD FOR ITS PRODUCTION
CORPS DE FORMAGE ET SON PROCÉDÉ DE FABRICATION

(30) Priorität: 27.03.2014 DE 102014104321
(43) Veröffentlichungstag der Anmeldung: 30.09.2015
(73) Patentinhaber: Leonhard Kurz Stiftung & Co. KG, 90763 Fürth (DE)
(72) Erfinder: Pforte, Klaus, 90522 Oberasbach (DE); Hahn, Martin, 91567 Herrieden (DE)
(74) Vertreter: Louis Pöhlau Lohrentz

(56) Entgegenhaltungen:
- EP-A2- 2 189 272
- WO-A1-99/37457
- WO-A2-2010/049696
- GB-A- 2 330 331
- US-A1- 2002 085 054
- US-A1- 2012 046 779

## Beschreibung

Die Erfindung betrifft ein Verfahren zum Herstellen eines Formkörpers sowie einen derart hergestellten Formkörper.

Um dekorative oder funktionale Elemente mit Kunststoffbauteilen zu kombinieren, ist es bekannt, Folienlagen mit derartigen Elementen in Spritzgussbauteile aufzunehmen. Hierbei wird eine solche Folienlage in eine Spritzgussform eingelegt und dort fixiert. Anschließend wird eine Kunststoffmasse in die Spritzgussform eingespritzt, wo sie sich mit der Folienlage verbindet und aushärtet. Ein bekanntes Verfahren hierfür ist das so genannte In-Mold-Decoration-Verfahren (In-Mold-Decoration = IMD) oder das Insert-Molding-Verfahren.

Solche Herstellungsverfahren sind jedoch in mehrfacher Hinsicht limitiert. Aufgrund der hohen Temperaturen und hohen Drücke beim Spritzgießen ist zunächst die Auswahl der verwendbaren Folienlagen beschränkt. Insbesondere Folien mit empfindlichen elektronischen Funktionsschichten oder Sicherheitselementen können nicht verwendet werden, da diese unter den Spritzgussbedingungen zerstört werden würden.

Ferner ist beim Spritzgießen die Gestaltungsfreiheit beschränkt, da im Wesentlichen nur eine weitgehend homogene Kunststoffmasse verwendet werden kann. Der resultierende Formkörper ist also abgesehen von der Folienlage ebenfalls homogen.

Zum Spritzgießen werden weiterhin aufwändig herzustellende und zu betreibende Formen als Werkzeug benötigt. Dies bedingt hohe Investitionen und macht Änderungen oder Individualisierungen der herzustellenden Bauteile problematisch. Weiterhin müssen die Formen regelmäßig ausgetauscht werden, da durch die vorerwähnten auftretenden hohen Drücke und Temperaturen ein hoher Verschleiß vorhanden ist.

EP 2 189 272 A2 offenbart die Merkmale im Oberbegriff des Anspruchs 1 und des Anspruchs 13.

Aufgabe der vorliegenden Erfindung ist es also, ein besonders einfaches und flexibles Verfahren zur Herstellung eines Formkörpers sowie einen derart herstellbaren Formkörper anzugeben.

Erfindungsgemäß wird diese Aufgabe durch den Gegenstand des Anspruchs 1 sowie des Anspruchs 13 gelöst.

Ein derartiges Verfahren zum Herstellen eines Formkörpers umfasst die Schritte:
a) Bereitstellen einer Folienlage mit einer dekorativen Schicht und/oder einer Funktionsschicht;
b) Aufbringen einer Kunststoffmasse in einer vorgegebenen dreidimensionalen Form auf die Folienlage mittels eines dreidimensionalen Druckverfahrens, so dass die Folienlage eine Oberflächenbeschichtung des Formkörpers bildet, wobei als Folienlage eine Transferfolie verwendet wird, welche eine Übertragungslage und eine davon ablösbare Trägerschicht aufweist, wobei die Kunststoffmasse in Schritt b) auf die Übertragungslage aufgebracht wird.

Ein so erhältlicher Formkörper umfasst also eine Folienlage und eine mittels eines dreidimensionalen Druckverfahrens in einer vorgegebenen dreidimensionalen Form auf die Folienlage aufgebrachte Kunststoffmasse.

Damit wird erreicht, dass die Folienlage eine Oberflächenbeschichtung der Unterseite des Formkörpers bildet. Die während der Herstellung des Formkörpers definierte Unterseite des Formkörpers kann in der späteren Anwendung des Formkörpers auch seine Oberseite oder seine Seitenfläche sein.

Dreidimensionale Druckverfahren erfolgen üblicherweise mit thermoplastischem Kunststoffmaterial, welches aufgeschmolzen wird und im flüssigen Zustand mittels beheizter Düsen tropfenweise zur Bildung einer Schicht verdruckt wird. Durch den sukzessiven Auftrag solcher Schichten können beliebige dreidimensionale Strukturen geformt werden.

Dabei wird der Kunststoff nur wenig über seine Schmelztemperatur erhitzt, damit der Kunststoff unmittelbar nach Auftreffen auf dem jeweiligen Untergrund sofort erstarrt und insbesondere nicht verlaufen kann. So kann eine hohe Druckauflösung erzielt werden, die vor allem durch die Bauart der Düsen bestimmt ist. Auf diese Weise verbinden sich die gedruckten Kunststofftropfen mit der darunter liegenden Folienlage zu einer Einheit.

Da die Kunststoffmasse sukzessive in kleinen Mengen aufgebracht wird, ist lediglich eine minimale Erwärmung über den Schmelzpunkt des Kunststoffs notwendig. Zudem erfolgt der Auftrag der Kunststoffmasse drucklos. Der Wärmeeintrag in die Folienlage ist daher sehr gering, so dass auch Folienlagen mit empfindlichen Dekor- oder Funktionselementen verwendet werden können, die die Druck- und/oder Temperaturbedingungen beim Spritzgießen nicht überstehen würden.

Der tropfen- bzw. schichtweise Auftrag der Kunststoffmasse eröffnet zudem gegenüber dem Spritzgießen deutlich erweiterte Gestaltungsmöglichkeiten des Formkörpers. So können beispielsweise die Eigenschaften der Kunststoffmasse, beispielsweise die Farbe oder die Leitfähigkeit der Kunststoffmasse, über das Volumen des Formkörpers variiert werden, um beispielsweise weitere dekorative oder funktionale Strukturen innerhalb des Formkörpers zu schaffen.

Da mittels dreidimensionaler Druckverfahren der freie Aufbau beliebig gestalteter Formkörper möglich ist, ist zudem keine Form als Werkzeug nötig, wie dies beim Spritzgießen der Fall wäre. Es ist also möglich, ohne weiteren Kosten- oder Zeitaufwand Änderungen an der Gestaltung des Formkörpers vorzunehmen oder individualisierte Formkörper herzustellen.

Die Folienlage, die ein- oder mehrschichtig sein kann, bildet so eine dekorative Oberfläche des Formkörpers aus. Aufgrund des tropfen- bzw. schichtweisen Auftrags der Kunststoffmasse beim dreidimensionalen Druck ergeben sich auf der Oberfläche des Formkörpers feine Abstufungen. Die Folienlage kann diese Abstufungen ausgleichen, so dass eine hochwertige, glatte Oberfläche resultiert.

Es ist dabei insbesondere vorteilhaft, wenn eine Folienlage verwendet wird, die eine Haftvermittlerschicht aufweist, auf welche in Schritt b) die Kunststoffmasse aufgebracht wird. Hierdurch wird eine besonders sichere Haftung zwischen der Folienlage und der Kunststoffmasse sichergestellt.

Zweckmäßigerweise wird eine Folienlage verwendet, deren Haftvermittlerschicht aus dem gleichen Kunststoffmaterial besteht wie die in Schritt b) aufgebrachte Kunststoffmasse. Die beim dreidimensionalen Drucken aufgebrachte Kunststoffmasse kann die Haftvermittlerschicht anschmelzen und sich sicher mit ihr verbinden. Die Haftvermittlerschicht stellt dabei also dieselben Eigenschaften zur Verfügung wie eine mit der Kunststoffmasse zuvor gedruckte Lage des Formkörpers, sodass die danach gedruckte Lage des Formkörpers mit der Haftvermittlerschicht genauso wie mit einer zuvor gedruckten Lage des Formkörpers zu einer Einheit verschmelzen kann.

Es ist dabei nicht zwingend notwendig, für die Haftvermittlerschicht den exakt gleichen Kunststoff wie für die Kunststoffmasse zu verwenden. Wesentlich ist, dass sich die Kunststoffe gut verbinden können. Es können also auch Kunststoffe aus verwandten Stoffklassen oder Kunststoffe mit ähnlichen Polaritäten verwendet werden.

Alternativ kann auch eine Folienlage verwendet werden, deren Haftvermittlerschicht einen wärmeaktivierbaren Klebstoff aufweist. Da beim Drucken die Kunststoffmasse im heißen Zustand aufgebracht wird, wird der Klebstoff punktuell beim Auftreffen eines Kunststofftropfens aktiviert und verbindet diesen Tropfen sicher mit der Folienlage.

Geeignete Klebstoffe für Kunststoffmassen aus Acrylnitril-Butadien-Styrol-Copolymerisat (ABS) oder Polycarbonat (PC) oder ABS-PC sind beispielsweise Klebstoffe auf Basis von Polyvinylchlorid (PVC) oder auf Basis von Acrylaten oder Klebstoffe auf Basis von Mischungen aus PVC und Acrylaten.

Zweckmäßigerweise weist die Haftvermittlerschicht eine Schichtdicke von 0,01 µm bis 50 µm, bevorzugt von 5 µm bis 50 µm auf. Damit können die aus dem dreidimensionalen Druck resultierenden Unebenheiten besonders gut ausgeglichen werden.

Erfindungsgemäß wird als Folienlage eine Transferfolie, insbesondere eine Heißprägefolie, verwendet, welche eine Übertragungslage und eine davon ablösbare Trägerschicht aufweist, wobei die Kunststoffmasse in Schritt b) auf die Übertragungslage aufgebracht wird.

Die Trägerschicht stabilisiert dabei die Übertragungslage, so dass diese auch empfindliche, nicht selbsttragende Schichten umfassen kann, welche ohne eine Trägerschicht nicht beschädigungsfrei verwendet werden könnten. Ferner schützt die Trägerschicht die Oberfläche der Übertragungslage vor Beschädigungen während des Herstellungsprozesses.

Die Trägerschicht besteht vorzugsweise aus Polyethylenterephthalat (PET), PC oder ABS und weist eine Schichtdicke von 5 µm bis 250 µm, bevorzugt von 10 µm bis 100 µm auf.

Erfindungsgemäß wird eine Folienlage verwendet, welche zumindest eine dekorative Schicht aufweist. Unter einer dekorativen Schicht sollen dabei Schichten verstanden werden, die einen visuell ansprechenden Effekt und/oder optische Informationen, insbesondere mittels Kontrast zwischen einer Farbe und/oder eines Reflexionsvermögens und/oder eines Absorptionsvermögens der dekorativen Schicht, bereitstellen.

Weiter bevorzugt wird eine Folienlage verwendet, deren zumindest eine dekorative Schicht eine der folgenden Schichten oder eine Kombination daraus ist oder umfasst: eine Schicht mit zumindest einem Farbmittel und/oder Pigment, einem im sichtbaren und/oder infraroten oder ultraviolettem Spektralbereich zur Fluoreszenz und/oder Lumineszenz anregbarem Pigment, einem optisch variablem Pigment, eine Flüssigkristallschicht, eine cholesterische Flüssigkristallschicht, eine Metallschicht, eine Schicht mit einer Reliefstruktur, insbesondere einer diffraktiven Gitterstruktur, einem Hologramm, einer Mattstruktur, eine Schicht mit einer mikrooptischen Struktur, insbesondere einer Mikrolinsen- und/oder Mikroprismenanordnung, eine Schicht aus einem textilen Material, einem Leder, einem Kunstleder oder einem Holzfurnier ist. Optisch variabel heißt in diesem Zusammenhang, dass sich das optische Erscheinungsbild abhängig vom Betrachtungswinkel und/oder Beleuchtungswinkel ändert.

Durch derartige Schichten oder Strukturen lassen sich vielfältige dekorative Effekte erzielen. Ferner können so Sicherheitselemente, z.B. Sicherheitshologramme, in die dekorative Schicht integriert werden, die beispielsweise dazu dienen können, den Formkörper zu authentifizieren und vor Fälschung zu schützen.

Auf die Folienlage können ferner Individualisierungs- oder Personalisierungsinformationen aufgebracht werden. Dies kann vor dem dreidimensionalen Druckvorgang in einem separaten Arbeitsschritt erfolgen. Beispielsweise kann die jeweilige Information durch Thermotransferdruck, Tintenstrahldruck, durch Laserablation oder durch Laserbehandlung einer Farbstoffschicht, die bei Wechselwirkung mit dem Laserlicht einen permanenten Farbumschlag zeigt, auf die Folienlage aufgebracht werden.

Auch Erfindungsgemäß wird eine Folienlage verwendet, welche zumindest eine Funktionsschicht aufweist. Unter Funktionsschichten sollen dabei Schichten verstanden werden, die der Folienlage zusätzliche Eigenschaften verleihen, wie beispielsweise den Schutz vor mechanischen Einflüssen oder zusätzliche Funktionalitäten, wie sie beispielsweise durch die Integration von elektronischen Bauelementen erzielt werden können. Bevorzugt weist die zumindest eine Funktionsschicht eine Schutzschicht zum Schutz vor mechanischen und/oder thermischen und/oder chemischen äußeren Einflüssen und/oder eine magnetische und/oder magnetisierbare Schicht auf. Damit können zum einen weitere, empfindliche Schichten der Folienlage vor schädlichen Einflüssen geschützt werden, so dass der Formkörper eine besonders gute Haltbarkeit aufweist. Durch die Integration von magnetischen oder magnetisierbaren Schichten kann der Formkörper zudem als Datenspeicher genutzt werden. Damit können beispielsweise Individualisierungsinformationen abgelegt werden oder Sicherheits- oder Authentifizierungscodes bereitgestellt werden, beispielsweise mittels eines Magnetstreifens.

Es ist weiter vorteilhaft, wenn die zumindest eine Funktionsschicht eine elektrische oder elektronische Schicht, insbesondere eine Schicht umfassend Leiterbahnstrukturen, Antennenstrukturen, elektrische oder elektronische Bauelemente, Sensoren, induktive oder kapazitive Berührungssensoren, Chips, Anzeigeelemente, insbesondere LED- oder OLED- oder LCD-Anzeigeelemente, ist oder umfasst.

Auf diese Weise können weitere Funktionen und Authentifizierungsmöglichkeiten in den Formkörper integriert werden, was dessen Anwendungsmöglichkeiten und dessen Fälschungssicherheit verbessert.

Es ist dabei zweckmäßig, wenn die Kunststoffmasse so aufgebracht wird, dass sie die zumindest eine Funktionsschicht lediglich partiell bedeckt.

Damit können beispielsweise freiliegende Leiterbahnstrukturen auf dem Formkörper bereitgestellt werden, die zum Kontaktieren von elektrischen oder elektronischen Elementen der Funktionsschicht genutzt werden können, so dass der Formkörper mit externen Geräten wechselwirken kann.

Weiter bevorzugt wird eine Folienlage mit einer Funktionsschicht verwendet, welche ein taktil wahrnehmbares Oberflächenrelief, insbesondere mit einer vorgegebenen Rauhigkeit und/oder mit einer vorgegebenen taktil wahrnehmbaren Information, vorzugsweise in Braille-Schrift, umfasst. Das taktil wahrnehmbare Oberflächenrelief kann insbesondere auch so ausgeführt sein, dass besondere Materialanmutung erzeugt wird, die von der Kunststoffmasse ansonsten nicht bereitgestellt werden kann. Beispielsweise kann dies eine samtartige, sogenannte Softtouch-Anmutung der Oberfläche sein.

Hierdurch können zusätzliche Informationen und Sicherheitselemente in den Formkörper integriert werden und dessen Verwendbarkeit für sehbehinderte Benutzer verbessert werden.

Bevorzugt wird nach Aufbringen der Kunststoffmasse in Schritt b) eine weitere Kunststoffmasse in einer vorgegebenen dreidimensionalen Form auf die der in Schritt b) aufgebrachten Kunststoffmasse abgewandten Seite der Folienlage mittels eines dreidimensionalen Druckverfahrens aufgebracht.

Mit anderen Worten wird also die Folienlage zwischen die beiden Kunststoffmassen eingeschlossen und liegt damit im Inneren des resultierenden Formkörpers. Damit wird die Folienlage besonders gut vor Umwelteinflüssen und Manipulationsversuchen geschützt. Die Folienlage weist dafür bevorzugt auf beiden Seiten eine Haftvermittlerschicht aus wärmeaktivierbarem Klebstoff auf, wie er hier bereits beispielhaft worden beschrieben ist.

Die Kunststoffmasse wird dabei bevorzugt mittels eines insbesondere robotisch geführten 3D-Druckkopfes aufgebracht.

Dies ermöglicht es, auch komplexe Geometrien des Formkörpers zu realisieren. Insbesondere die Verwendung eines Roboterarms stellt mehr Freiheitsgrade zur Verfügung als ein konventioneller 3D-Drucker. Damit ist es möglich, die Kunststoffmasse beispielsweise auch auf gekrümmte Flächen aufzubringen. Der Roboterarm trägt und führt hierbei den Druckkopf des 3D-Druckers und kann dabei der Kontur der gekrümmten Fläche folgen, insbesondere in allen drei Raumrichtungen X, Y, Z.

Zweckmäßigerweise wird die Kunststoffmasse in Form von Tropfen und/oder Strängen und/oder Fäden aufgebracht. Dies eröffnet besonders große Gestaltungsspielräume bei der Formgebung des Formkörpers.

Bevorzugt wird als Kunststoffmasse ein thermoplastischer Kunststoff, insbesondere ABS, Polycarbonat oder ABS-PC verwendet. Diese Kunststoffe lassen sich besonders gut in dreidimensionalen Druckverfahren verarbeiten und besitzen Schmelzpunkte, die den Auftrag auf eine Folienlage ermöglichen, ohne dass diese beschädigt wird.

Vorzugsweise wird vor dem Aufbringen der Kunststoffmasse die Folienlage auf einem Stützelement mit einer vorgegebenen Oberflächengeometrie fixiert, insbesondere mittels mechanischer Klemmmittel und/oder durch Vakuumfixierung.

Damit wird sichergestellt, dass sich die Folienlage während des Druckvorgangs nicht verschieben kann. Die Oberflächengeometrie des Stützelements muss dabei nicht plan sein, sondern kann auch gekrümmte Flächen umfassen, so dass auch der Formkörper eine entsprechend gekrümmte Oberfläche erhält.

Insbesondere kann das Stützelement konvexe und/oder konkave Flächenabschnitte umfassen. Generell sind auch beliebige Freiformflächen realisierbar. Gegebenenfalls kann die Folienlage vor dem Druckvorgang und dem Auflegen auf das Stützelement noch entsprechend umgeformt werden.

Es ist dabei zweckmäßig, wenn das Stützelement aus einem hochglanzpolierten und staubfreien Material besteht, beispielsweise aus Edelstahl, so dass Beschädigungen und Verschmutzungen der Folienlage vermieden werden.

Vorzugsweise wird vor dem Aufbringen der Kunststoffmasse die Folienlage auf eine Temperatur erwärmt, um insbesondere bei einer Auflage der Folienlage auf einer gekrümmten Fläche das faltenfreie Anschmiegen der Folienlage an die darunterliegende Fläche zu unterstützen und um insbesondere auch das Verschmelzen der Kunststoffmasse mit der damit oberhalb der Raumtemperatur erwärmten thermoplastischen Haftvermittlerschicht zu unterstützen. Die Folienlage kann beispielsweise auf eine Temperatur von etwa 30°C bis etwa 150 °C, bevorzugt auf eine Temperatur von etwa 60°C bis etwa 100 °C erwärmt werden.

Dies verbessert die Verbindung der aufgedruckten Kunststoffmasse mit der Folienlage, so dass sich diese später nicht mehr von der Kunststoffmasse ablösen lässt. Eine hierfür notwendige Heizvorrichtung kann beispielsweise in das Stützelement und/oder in den Druckkopf des 3D-Druckers integriert werden.

Es ist ferner zweckmäßig, wenn beim Aufbringen der Kunststoffmasse eine Mehrzahl von Kunststoffen mit unterschiedlichen optischen Eigenschaften aufgetragen wird, wobei der 3D-Druckkopf so geführt wird, dass durch die Kunststoffe insbesondere eine optisch wahrnehmbar Information dargestellt ist.

Die Kunststoffe können sich dabei beispielsweise in ihrer Färbung, ihrem Brechungsindex oder ihrer Transparenz unterscheiden.

Auf diese Weise können weitere Design- und/oder Sicherheitselemente in den Formkörper integriert werden, die von der Folienlage unabhängig sein können oder sich mit dieser zu einem Gesamtdesign ergänzen können. Es ist dabei zweckmäßig, wenn zumindest einer der Kunststoffe transparent ist.

Die derart im Formkörper erzeugte optisch wahrnehmbare Information muss dabei nicht flächig sein. Durch den dreidimensionalen Druck ist es möglich, dass sich die Information auch in drei Dimensionen erstreckt. Dies erhöht die Fälschungssicherheit des Formkörpers beträchtlich.

Es ist ferner vorteilhaft, wenn die optisch wahrnehmbare Information zumindest ein alphanumerisches Zeichen, ein Symbol, ein Logo, ein geometrisches Muster, insbesondere ein Guillochenmuster, ein Pixelbild und/oder eine Personalisierungsinformation ist oder umfasst.

Auch mehrere Muster, die sich ergänzen, sind möglich. So können beispielsweise Interferenzeffekte und dergleichen erzeugt werden.

Bevorzugt umfasst zumindest einer der unterschiedlich gefärbten Kunststoffe einen Farbstoff, ein Pigment, Nanopartikel, ein optisch variables Pigment, eine thermochrome oder photochrome Substanz, um so den gewünschten Farbeffekt zu erzeugen.

Vorzugsweise umfasst dabei einer der unterschiedlich gefärbten Kunststoffe einen Farbstoff oder ein Pigment, welches im ultravioletten und/oder sichtbaren und/oder infraroten Spektralbereich detektierbar und/oder zur Fluoreszenz und/oder Phosphoreszenz in diesen Spektralbereichen anregbar ist.

Damit können zusätzliche Informationen oder Sicherheitsmerkmale in den Formkörper integriert werden, die gegebenenfalls mit dem menschlichen Auge nicht zu erkennen sind oder nur unter entsprechender Beleuchtung sichtbar werden. Dies eignet sich insbesondere auch zur Integration maschinenlesbarer Sicherheitsmerkmale in den Formkörper.

Alternativ oder zusätzlich kann die Kunststoffmasse zumindest bereichsweise Substanzen und/oder Partikel umfassen, welche maschinell, insbesondere magnetisch, detektierbar sind.

Es ist ferner zweckmäßig, wenn der Formkörper nach dem Aufbringen der Kunststoffmasse einer Oberflächenbehandlung unterzogen wird.

Bevorzugt umfasst eine solche Oberflächenbehandlung eine Lösemittelbehandlung und/oder eine zumindest partielle Beschichtung, insbesondere eine Nasslackierung und/oder das Auftragen der Transferfolie, des Formkörpers.

Damit kann eine besonders ansprechende Oberflächengestaltung erreicht werden. Insbesondere können durch eine Lösemittelbehandlung oder eine Beschichtung Rauhigkeiten der Oberfläche ausgeglichen werden, die notwendigerweise beim dreidimensionalen Druck entstehen. Ferner können so weitere Dekorelemente oder Schutzlacke aufgebracht werden.

Als Lösemittel für eine Lösemittelbehandlung eignen sich dabei insbesondere Aceton (Propanon bzw. Dimethylketon) im Falle von ABS sowie Dichlormethan oder Dichlorethan im Falle von PC.

Die Erfindung wird nun anhand von Ausführungsbeispielen näher erläutert. Es zeigen
- Fig. 1: Eine schematische Schnittdarstellung durch ein Ausführungsbeispiel eines Formkörpers;
- Fig. 2: eine schematische Schnittdarstellung durch ein alternatives Ausführungsbeispiel eines Formkörpers mit gekrümmter Grundfläche;
- Fig. 3: eine schematische Schnittdarstellung durch ein alternatives Ausführungsbeispiel eines Formkörpers mit beidseitig kunststoffbeschichteter Folienlage; und
- Fig. 4A-C: eine schematische Darstellung der Fertigung eines Formkörpers mit einer mehrfarbigen Kunststoffmasse.

Ein Formkörper 1 umfasst eine Folienlage 11, auf die mittels eines dreidimensionalen Druckverfahrens eine Kunststoffmasse 12 aufgebracht ist.

Die Folienlage 11 ist dabei eine Transferfolie, welche eine Trägerlage 111 umfasst, auf die die letztlich im Formkörper verbleibende Übertragungslage 112 ablösbar angebracht ist.

Eine Schichtdicke der Folienlage 11 beträgt bevorzugt von 10 µm bis 250 µm, besonders bevorzugt von 20 µm bis 250 µm.

Die Folienlage 11 kann eine Haftvermittlerschicht aufweisen, die in den Figuren nicht dargestellt ist. Die Kunststoffmasse 12 wird dann auf diese Haftvermittlerschicht aufgebracht. Es kann sich dabei um einen zur Kunststoffmasse chemisch verwandten Kunststoff und/oder um einen wärmeaktivierbaren Klebstoff handeln, beispielsweise um Klebstoff auf Basis von Polyvinylchlorid (PVC) oder auf Basis von Acrylaten oder Klebstoff auf Basis von Mischungen aus PVC und Acrylaten.

Ferner umfasst die Folienlage dekorative oder funktionale Schichten oder auch Kombinationen daraus, die sowohl vollflächig als auch partiell vorhanden sein können.

Beispiele für dekorative Schichten sind eine Schicht mit zumindest einem Farbmittel, Pigment, einem im sichtbaren und/oder infraroten oder ultraviolettem Spektralbereich zur Fluoreszenz und/oder Lumineszenz anregbarem Pigment, einem optisch variablem Pigment, eine Flüssigkristallschicht, eine cholesterische Flüssigkristallschicht, eine Metallschicht, eine Schicht mit einer Reliefstruktur, insbesondere einer diffraktiven Gitterstruktur, einem Hologramm, einer Mattstruktur, eine Schicht mit einer mikrooptischen Struktur, insbesondere einer Mikrolinsen- und/oder Mikroprismenanordnung, eine Schicht aus einem textilen Material, einem Leder, einem Kunstleder oder einem Holzfurnier.

Bei den funktionalen Schichten kann es sich um Schutzschichten zum Schutz vor mechanischen und/oder thermischen und/oder chemischen äußeren Einflüssen und/oder magnetische und/oder magnetisierbare Schichten handeln. Auch elektrische oder elektronische Schichten, insbesondere Schichten umfassend Leiterbahnstrukturen, Antennenstrukturen , elektrische oder elektronische Bauelemente, Sensoren, induktive oder kapazitive Berührungssensoren, Chips, Anzeigeelemente, insbesondere LED-, OLED- oder LCD-Anzeigeelemente, können verwendet werden.

Die Folienlage 11 kann ferner ein taktil wahrnehmbares Oberflächenrelief aufweisen, insbesondere mit einer vorgegebenen Rauhigkeit und/oder mit einer vorgegebenen taktil wahrnehmbaren Information, vorzugsweise in Braille-Schrift. Das taktil wahrnehmbare Oberflächenrelief kann insbesondere auch so ausgeführt sein, dass besondere Materialanmutung erzeugt wird, die von der Kunststoffmasse ansonsten nicht bereitgestellt werden kann. Beispielsweise kann dies eine samtartige, sogenannte Softtouch-Anmutung der Oberfläche sein.

Die Kunststoffmasse 12 ist vorzugsweise ein thermoplastischer Kunststoff, insbesondere Acrylnitril-Butadien-Styrol-Copolymerisat (ABS), Polycarbonat (PC) oder ABS-PC.

Es ist dabei auch möglich, dass die Kunststoffmasse 12 aus mehreren, insbesondere unterschiedlich gefärbten Kunststoffen besteht, von denen zumindest einer vorzugsweise transparent ist.

Auf diese Weise können weitere Design- und/oder Sicherheitselemente in den Formkörper 1 integriert werden, die von der Folienlage 11 unabhängig sein können oder sich mit dieser zu einem Gesamtdesign ergänzen können.

Die derart im Formkörper 1 erzeugten Design- und/oder Sicherheitselemente müssen dabei nicht flächig sein. Durch den dreidimensionalen Druck ist es möglich, dass sich sie sich auch in drei Dimensionen erstrecken. Dies erhöht die Fälschungssicherheit des Formkörpers 1 beträchtlich.

Mögliche Design- und/oder Sicherheitselemente sind dabei alphanumerische Zeichen, Symbole, Logos, geometrische Muster, insbesondere Guillochenmuster, Pixelbilder und/oder Personalisierungsinformationen. Auch mehrere Muster, die sich ergänzen, sind möglich. So können beispielsweise Interferenzeffekte und dergleichen erzeugt werden.

Bevorzugt umfasst zumindest einer der unterschiedlich gefärbten Kunststoffe einen Farbstoff, ein Pigment, Nanopartikel, ein optisch variables Pigment, eine thermochrome oder photochrome Substanz, um so den gewünschten Farbeffekt zu erzeugen.

Auch Farbstoffe oder Pigmente, welche im ultravioletten, visuellen oder infraroten Spektralbereich detektierbar und/oder zur Fluoreszenz und/oder Phosphoreszenz in diesen Spektralbereichen anregbar sind, können so in definierten Mustern in die Kunststoffmasse 12 eingebracht werden. Ebenso können magnetische oder magnetisierbare Partikel in die Kunststoffmasse 12 eingebracht werden, um maschinell detektierbare Sicherheitsmerkmale zu schaffen.

Der Formkörper 1 kann ferner noch mit weiteren Oberflächenbeschichtungen, beispielsweise Nasslacken oder weiteren Transferfolien versehen werden.

Zur Herstellung des Formkörpers 1 wird die Kunststoffmasse 12 mittels eines Druckkopfs 3 eines dreidimensionalen Druckers 2 in Form einzelner Tropfen 4 auf die Folienlage 11 aufgebracht.

Der additive 3D-Druck erfolgt üblicherweise mit thermoplastischem Kunststoffmaterial, welches aufgeschmolzen wird und im flüssigen Zustand mittels beheizter Düsen tropfenweise zur Bildung einer Schicht verdruckt wird. Dabei wird der Kunststoff nur wenig über seine Schmelztemperatur erhitzt, damit der Kunststoff unmittelbar nach Auftreffen auf dem jeweiligen Untergrund sofort erstarrt und insbesondere nicht verlaufen kann. So kann eine hohe Druckauflösung erzielt werden, die vor allem durch die Bauart der Düsen des Druckkopfes 3 bestimmt ist.

Auf diese Weise verbindet sich der gedruckte Kunststofftropfen 4 mit der darunter liegenden Folienlage 11 zu einer Einheit, wenn diese eine bereits vorhandene Schicht des zu bildenden Formkörpers 1 ist. Als Kunststoffe eignen sich z.B. Acrylnitril-Butadien-Styrol-Copolymerisat (ABS), Polycarbonat (PC), ABS-PC.

Wird die Unterlage des 3D-Körpers nun von der Übertragungslage 112 einer Transferfolie 11 gebildet, so verbinden sich die Kunststofftropfen 4 mit der obersten Schicht der Übertragungslage 112.

Dabei ist es vorteilhaft, wenn diese oberste Schicht eine Haftvermittlerschicht ist bzw. umfasst, die vorzugsweise aus demselben Kunststoffmaterial besteht wie die Kunststofftropfen. Aber auch chemisch ähnliche Kunststoff- oder Polymermaterialien sind einsetzbar, wenn die Haftung zwischen Kunststofftropfen und der obersten Schicht der Übertragungslage groß genug ist.

Alternativ oder zusätzlich kann der Kunststoff auch strangförmig oder fadenförmig auf die Folienlage 11 aufgetragen werden.

Alternativ oder zusätzlich zur thermoplastischen Verbindung ist auch eine Verbindung zwischen dem Kunststoff und Folienlage über chemisch-reaktive Vorgänge zwischen beiden Materialien möglich.

Bevorzugt ist der Untergrund 5, auf der die Folienlage 11 während der Fertigung und mittelbar auch der Formkörper 1aufliegt, möglichst glatt, vorzugsweise hochglanzpoliert und möglichst staubfrei. So kann eine möglichst glatte äußere Oberfläche des Formkörpers 1 mit der applizierten Folienlage 11 erzielt werden.

Bekannte 3D-Druckverfahren haben eine Auflösung von etwa 100 µm bis 500 µm. Dies erzeugt, insbesondere an geneigten Flächen des Formkörpers 1 Oberflächenrauhigkeiten und Treppeneffekte, die im Bereich dieser Auflösung liegen.

Es ist daher bevorzugt, wenn die Folienlage 11 eine Dicke und Beschaffenheit aufweist, um diese Oberflächenrauhigkeit zumindest teilweise so auszugleichen, dass nur noch eine sehr geringe Oberflächenrauhigkeit des Formkörpers 1 an der späteren äußeren Oberfläche des Formkörpers 1 mit der anhaftenden Übertragungslage vorhanden ist. Insbesondere ist die Haftvermittlerschicht bevorzugt etwa 5 µm bis 50 µm dick.

Bei Verwendung einer Transferfolie als Folienlage 11 wird diese so angeordnet, dass die Trägerfolie 111 auf der dem Formkörper 1 abgewandten Seite der Übertragungslage 112 angeordnet ist und dass die freiliegende oberste Schicht der Übertragungslage 112 dem Formkörper 1 zugewandt ist.

Um die Haftung der Kunststofftropfen 4 auf der Folienlage 11 zu erhöhen, ist es vorteilhaft, die Folienlage 11 auf eine Temperatur zu erwärmen, die knapp unterhalb der Schmelztemperatur der Kunststofftropfen 4 liegt. Dadurch findet das Erkalten des Kunststofftropfens 4 auf der Folienlage 11 langsam statt, was die Verbindung beider Kunststoffe verbessert.

Die Folienlage 11 kann mittels einer Vakuumansaugung und/oder mechanischen Mitteln auf dem Untergrund 5 befestigt sein, damit ein Verrutschen und/oder Verziehen der Folienlage 11 während des 3D-Drucks verringert oder ganz verhindert wird.

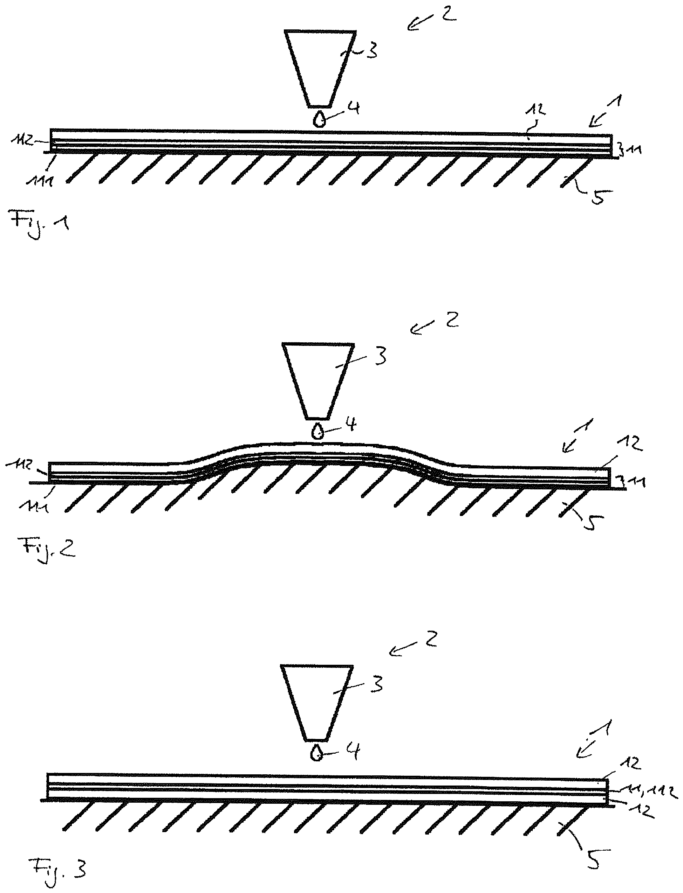

Die Transferfolie kann auf einem ebenen Untergrund 5 angeordnet sein, wobei die meisten bekannten und stark verbreiteten 3D-Druckgeräte zum Einsatz kommen können. Die Folienlage 11 kann aber auch, wie in Fig. 2 gezeigt, auf einem zwei- oder dreidimensional verformten Untergrund 5 angeordnet sein, beispielsweise auf einem konvex und/oder konkav gekrümmten Untergrund 5.

Dabei kann dieser gekrümmte Untergrund 5 insbesondere auch zwei benachbarte Außenflächen des Formkörpers 1 entsprechen, wodurch die Folienlage 11 später an diesen beiden benachbarten Außenflächen des Formkörpers 1 appliziert wäre. Dabei ist es besonders vorteilhaft, wenn die Folienlage 11 auf diesem Untergrund 5 vorgewärmt und mittels Vakuumansaugung fixiert ist.

Der Druckkopf 3 kann dabei bevorzugt von einem Roboterarm in allen Freiheitsgraden bewegt werden.

Ist der Formkörper 1 auf gewünschte Weise auf der Folienlage 11 aufgebaut worden, ist es in einer Ausführungsform der Erfindung möglich, den Formkörper 1 derart zu wenden, dass die bisherige, nun mit der Übertragungslage 112 der Folienlage 11 beschichteten Unterseite eine Oberseite des Formkörpers 1 bildet. Dies ist in Fig. 3 dargestellt.
Die Trägerlage 111 der Folienlage 11 kann nun abgezogen werden. Danach ist es möglich, auf die nun freiliegende Schicht der Übertragungslage 112 den Aufbau des Formkörpers 1 fortzusetzen.

Dazu ist es wieder vorteilhaft, wenn diese äußerste Schicht der Übertragungslage 112 aus demselben Kunststoffmaterial oder einem chemisch ähnlichen Kunststoff- oder Polymermaterial besteht, damit die Haftung zwischen der Übertragungslage 112 und der direkt darauf anliegenden Schicht des Formkörpers 1 ausreichend stark ist.

Dadurch kann die Übertragungslage 112 der Transferfolie 11 innerhalb des Formkörpers 1 eingebettet werden und dadurch, alternativ zum Zweck der Oberflächenbeschichtung nun eine innere dekorative Schicht oder Schichtgebilde und/oder eine innere funktionale Schicht oder Schichtgebilde des Formkörpers 1 bilden.

Beispielsweise kann auf die Übertragungslage 112 eine transparente, transluzente oder opake Schutzschicht, die insbesondere vergleichsweise dünn ausgebildet ist, aufgetragen werden, um beispielsweise die chemische und/oder thermische und/oder mechanische Beständigkeit der Übertragungslage 112 zu erhöhen.

Diese Schutzschicht kann dabei auch eine Oberflächenstrukturierung erhalten, beispielsweise eine taktil wahrnehmbare Struktur, beispielsweise mit einer gewünschten Rauigkeit, Reliefstruktur oder einer gewünschten Kodierung, insbesondere als Braille-Schrift.

Der fertig gestellte Formkörper 1 kann ähnlich wie andere bekannte Kunststoffkörper anschließend mit einer weiteren Oberflächenbehandlung und/oder Oberflächenbeschichtung versehen werden.

Beispielsweise kann die noch vorhandene Oberflächenrauhigkeit in einem Lösemittelbad verringert werden. Dies ist vor allem dann sinnvoll, wenn einerseits die Folienlage 11 in dem Formkörper 1 eingebettet ist und nicht an der Oberfläche freiliegt und andererseits wenn anschließend eine weitere Oberflächenbeschichtung mit einer weiteren Transferfolie und/oder mittels Nasslackierung vorgesehen ist.

Dabei kann eine weitere Oberflächenbeschichtung mit einer weiteren Transferfolie zweckmäßig sein, um optische und/oder funktionale Kombinationen oder Wechselwirkungen zwischen beiden Transferfolien-Beschichtungen zu erreichen.

Beispielsweise kann eine Überlagerung zweier feiner optischer Strukturen einen Moire-Effekt erzeugen. Dazu kann die zuerst applizierte Folienlage 11 feine optische Gitterstrukturen oder ein Mikrobildraster oder ähnliches aufweisen. Die zweite Transferfolie kann ebenfalls feine optische Gitterstrukturen oder ein Mikrolinsenraster aufweisen. Alternativ dazu könnte das Mikrolinsenraster auch als transparente Schicht des Formkörpers 1 auf die zuerst applizierte Folienlage 11 gedruckt werden.

Die weitere Oberflächenbeschichtung kann aber auch dazu verwendet werden, um eine elektrische Funktionalität mit der zuerst applizierten Folienlage 11 zu erreichen. Beispielsweise können sich zwei elektrisch leitfähige Schichten der ersten und weiteren Übertragungslage so überlagern, dass induktive und/oder kapazitive Wechselwirkungen entstehen. Beispielsweise kann dies zur Verwirklichung eines doppellagigen Touchelements oder einer doppellagigen Antenne verwendet werden.

Eine mögliche Anwendung für einen solchen Formkörper 1 ist eine ID-Karte aus Kunststoff. Die Übertragungslage 112 der Transferfolie 11 soll dabei die Funktion eines Sicherheitselements, beispielsweise eines KINEGRAM® bereitstellen. Die Übertragungslage 112 kann dabei die gesamte Oberfläche der ID-Karte bedecken oder aber nur einen Teilbereich. Das heißt, dass die mit der Übertragungslage 112 zu beschichtende Unterseite des Formkörpers 1 später die Oberseite bzw. Sichtseite des Formkörpers 1 darstellt.

Die personalisierten Informationen, die auf der Karte darzustellen sind, werden mittels verschiedenfarbiger Kunststoffe während des 3D-Drucks direkt eingebracht. Die personalisierten Informationen werden also in die Datenverarbeitung des 3D-Druckers eingespeist und werden dort in die Daten des virtuellen 3D-Daten-Modells des Formkörpers 1 integriert.

Beispielsweise können 3 Farben vorgesehen sein: eine erste Farbe für den Hintergrund, beispielsweise weiß oder hellgrau; eine zweite Farbe für einen Sicherheitsdruck, beispielsweise grün oder blau für ein Guillochenmuster; eine dritte Farbe, für die personalisierten Informationen, beispielsweise schwarz. Die personalisierten Informationen können dabei Buchstaben, Zahlen, Symbole oder auch Grafiken oder ein Pixelbild, insbesondere ein Rasterbild oder Halbtonbild sein.

Die personalisierten Informationen können dabei so gedruckt werden, dass sie nicht nur oberflächlich vorhanden sind, sondern in mehreren oder insbesondere in allen Schichten des 3D-Körpers. So ist eine Fälschung dieser Informationen sehr stark erschwert.
Bevorzugt weist der Kunststoff für zumindest eine der Farben spezielle Pigmente auf, die maschinenlesbare Eigenschaften haben und/oder nur unter UV-Licht oder IR-Licht sichtbare Pigmente oder Zusatzstoffe sind. Dadurch wird ein zusätzliches und leicht überprüfbares Echtheitsmerkmal integriert.

Es ist ebenfalls möglich, mit einem zusätzlich eingefügten Kunststoff mit magnetischen Partikeln einen magnetstreifen-ähnlichen Datenspeicher in den 3D-Körper einzuarbeiten.

Die letzte äußerste Schicht des Formkörpers 1 kann die personalisierten Informationen zusätzlich als Oberflächenrelief darstellen. Dies können entweder dieselben Informationen sein oder aber alternativ oder zusätzlich in einer anderen Kodierung, beispielsweise als Braille-Schrift.

Die mit dem Sicherheitselement versehene Sichtseite des Formkörpers 1 kann nach Fertigstellung des Formkörpers 1 wie oben beschrieben noch zusätzlich mit einer weiteren insbesondere transparenten Schutzschicht mittels 3D-Druck beschichtet werden.

Auch diese Schutzschicht kann, insbesondere registergenau zu den bereits eingebrachten personalisierten Informationen ein Oberflächenrelief beinhalten. Weisen die personalisierten Informationen ein Pixelbild, beispielsweise ein Rasterbild auf, kann das Oberflächenrelief auch dieses Rasterbild als taktil fühlbares Relief beinhalten.

Ein weiteres Anwendungsbeispiel wäre, ähnlich zur ID-Karte, das Versehen von 3D-gedruckten Ersatzteilen beispielsweise für Maschinen mit einem fälschungssicheren Merkmal einer Transferfolie 11 zu versehen, um gefälschte gedruckte Ersatzteile von echten gedruckten Ersatzteilen unterscheiden zu können.

Eine weitere Anwendungsmöglichkeit liegt im Bereich des Spritzgießens. Dort besteht das Problem, dass durch die dort auftretenden hohen Drücke und Temperaturen einige empfindliche Komponenten nur mit hohem Aufwand oder gar nicht eingesetzt werden können. Insbesondere ist das Hinterspritzen von Elektronik oder anderweitig empfindlichen Schichten (z.B. thermochrome Materialien, empfindliche Oberflächenstrukturen oder weiche Materialien) nur begrenzt möglich.

Liegt eine solche empfindliche Komponente als Transferfolie 11 vor, beispielsweise mit einer Übertragungslage 112 umfassend Leiterbahnen und/oder elektronische Bauteile und/oder thermisch und/oder mechanisch sensible Schichten, ist es möglich, auf diese Folie 11 eine schützende Schicht mittels 3D-Druck zu applizieren.

Diese Schicht kann als mechanische Stützschicht, aber alternativ oder zusätzlich auch als thermisch isolierende Schicht dienen, wenn anschließend das Zwischenprodukt aus Transferfolie und 3D-Druckschicht in einem folgenden Arbeitsgang hinterspritzt wird. Man stellt also mittels 3D-Druck einen Insert für ein Spritzgussverfahren her, ohne dass man diesen Insert vorher mittels thermisch und/oder mechanisch stressend auf die empfindlichen Komponenten wirkenden Verfahren herstellen muss.

Natürlich kann auf einen nachfolgenden Spritzguss auch verzichtet werden und das gesamte Teil schonend mit 3D-Druck hergestellt werden.

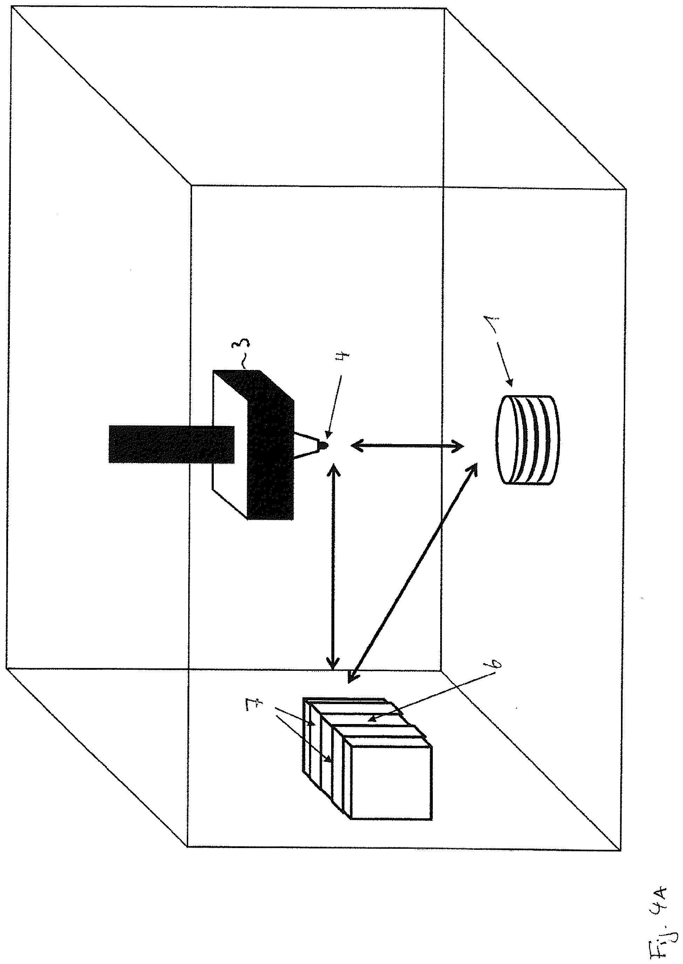

In den Figuren 4A bis 4D ist schließlich schematisch eine Möglichkeit dargestellt, eine Kunststoffmasse 12 aus unterschiedlich gefärbten Kunststoffen im dreidimensionalen Druck zu fertigen.

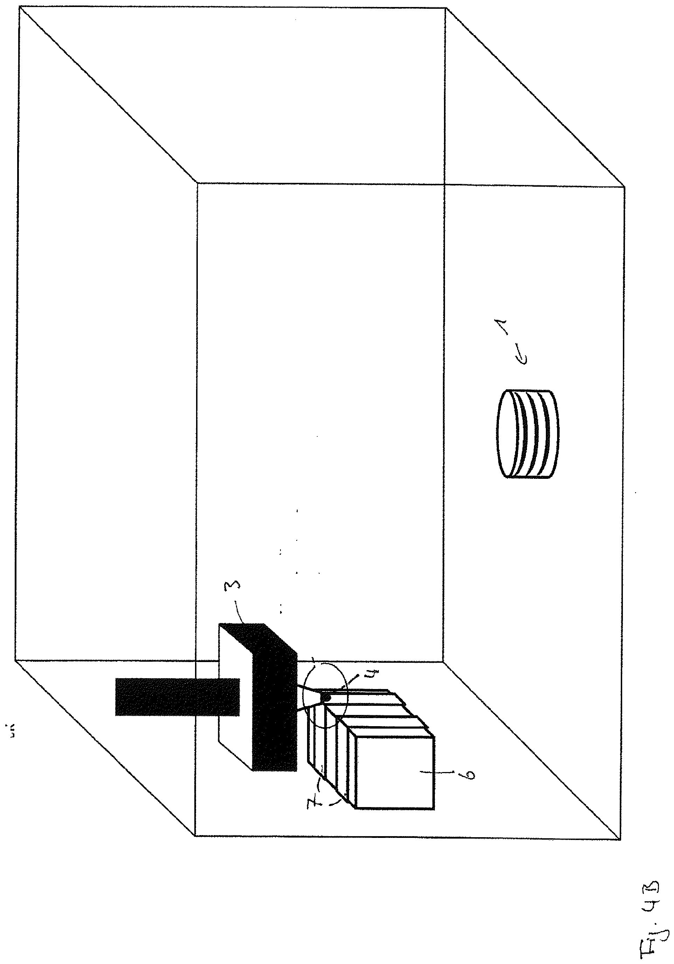

Hierzu produziert der Druckkopf 3 zunächst einen Kunststofftropfen 4, der jedoch noch nicht vom Druckkopf abgelöst wird. Der Druckkopf 3 fährt nun, wie in Fig. 4B gezeigt, eine Heizvorrichtung 6 an, auf der unterschiedlich gefärbte oder mit unterschiedlichen Partikeln versehene Folien 7 angeordnet sind. Je nach gewünschter Beimengung zum Kunststofftropfen 4 bringt der Druckkopf 3 nun dien Kunststofftropfen 4 in Kontakt mit der entsprechenden Folie, ohne dass sich der Kunststofftropfen 4 vom Druckkopf 3 ablöst.

Die Farbstoffe oder Partikel werden damit von der Folie 7 abgenommen und haften am Kunststofftropfen 4 und/oder lösen sich im Kunststoff.

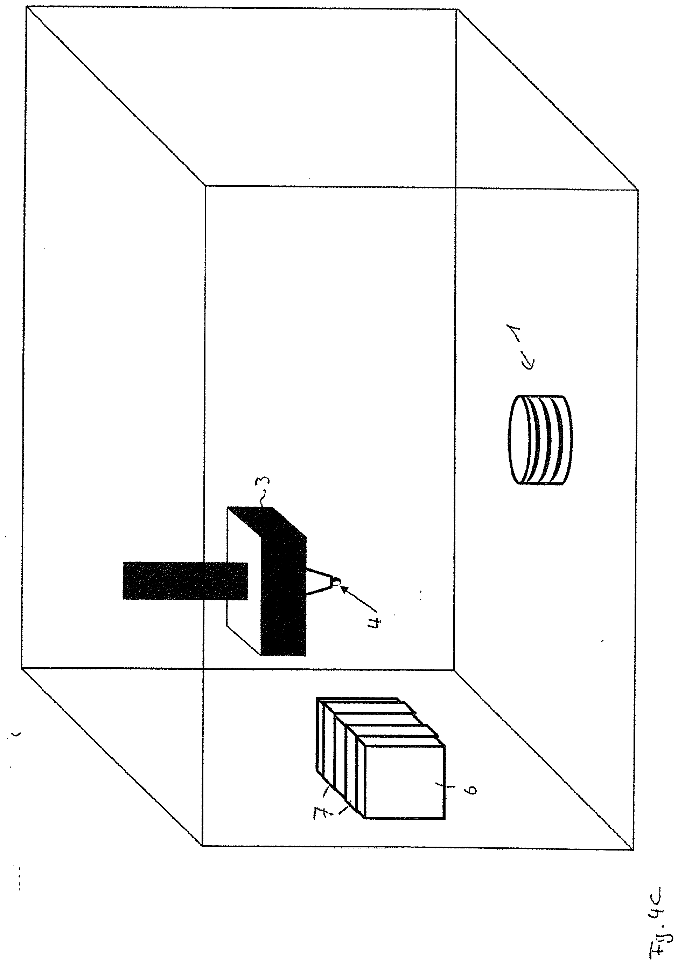

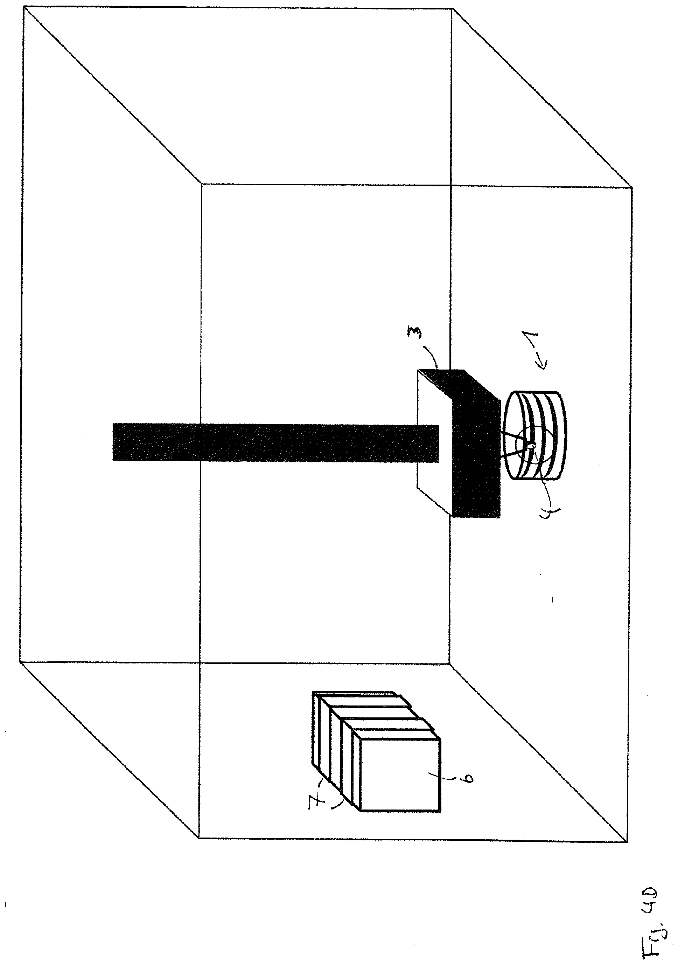

Wie in Fig. 4C gezeigt, nimmt der Druckkopf 3 nun den Kunststofftropfen 4 wieder von der Folie 7 ab. Anschließend fährt der Druckkopf 3 den Formkörper 1 an und legt den Kunststofftropfen 4 an der gewünschten Stelle an dem Formkörper 1 ab (Fig. 4D).

Damit ist es möglich, nach dem Aufschmelzen des Kunststoffmaterials, jedoch vor dem Aufdrucken bzw. Ablagern des Kunststoffmaterials auf/an dem Formkörper 1, das Kunststoffmaterial in seinen Eigenschaften zu modifizieren und so modifiziertes Kunststoffmaterial gezielt in den Formkörper 1 einzubringen. Beispielsweise könnte mittels mit dem Kunststofftropfen 4 aufgenommener Metallkomponenten von der Folie 7 stückweise eine elektrisch leitfähige Leiterbahn innerhalb des Formkörpers oder an der Oberfläche des Formkörpers 1 gedruckt werden oder andere ansonsten nicht anders in den Formkörper 1 integrierbare Elemente in das Innere und/oder an das Äußere des Formkörpers eingebracht/angebracht werden. Beispielsweise können das nicht aufschmelzbare Materialien wie Kristalle oder spezielle Halbleiter sein.

Besonders bevorzugt ist ein Verfahren zum dreidimensionalen Drucken eines Formkörpers, das sich dadurch auszeichnet,
- dass beim dreidimensionalen Drucken eine vorgegebene Menge einer Kunststoffmasse in einem Druckkopf aufgeschmolzen wird, im geschmolzenen Zustand in Kontakt mit zumindest einem Zuschlagstoff gebracht wird und nach Aufnahme des zumindest einen Zuschlagstoffs mittels des Druckkopfs an einer vorgegebenen Position abgelegt wird.

Ein Ausführungsbeispiel eines solchen Verfahrens ist beispielsweise oben anhand von Fig. 4a bis Fig. 4c beschrieben.

Optional zeichnet sich das Verfahren durch eines oder mehrere der folgenden Merkmale aus:
- dass der zumindest eine Zuschlagstoff in Form einer Folie und/oder auf einer Trägerfolie bereitgestellt wird;
- dass der zumindest eine Zuschlagstoff mittels einer Heizvorrichtung auf eine vorgegebene Temperatur erwärmt wird;
- dass der zumindest eine Zuschlagstoff ein Farbstoff, ein Pigment, Nanopartikel, ein optisch variables Pigment, eine thermochrome oder photochrome Substanz, ein Farbstoff oder ein Pigment, welches im ultravioletten, sichtbaren oder infraroten Spektralbereich detektierbar und/oder zur Fluoreszenz und/oder Phosphoreszenz in diesen Spektralbereichen anregbar ist, ein Metall, ein Halbleiter und/oder ein kristallines Material ist;
- dass durch den zumindest einen Zuschlagstoff eine dekorative oder funktionale Struktur, insbesondere eine optische Information, eine elektrische oder elektronische Struktur, insbesondere eine Leiterbahnstruktur und/oder Antennenstruktur, in dem Formkörper ausgebildet wird.

Ein solches Verfahren kann in Kombination mit dem vorher insbesondere anhand von Fig. 1 bis Fig. 3 beschriebenen Verfahren zum Herstellen eines Formkörpers durch dreidimensionalen Druck auf eine Folie und den dort beschriebenen Merkmalen, aber auch unabhängig davon verwendet werden.

### Bezugszeichenliste

- 1: Formteil
- 11: Folienlage
- 111: Trägerschicht
- 112: Übertragungslage
- 12: Kunststoffmasse
- 2: dreidimensionaler Drucker
- 3: Druckkopf
- 4: Kunststofftropfen
- 5: Unterlage
- 6: Heizvorrichtung
- 7: Folie

## Patentansprüche

1. Verfahren zum Herstellen eines Formkörpers (1) mit den Schritten:
a) Bereitstellen einer Folienlage (11) mit einer dekorativen Schicht und/oder einer Funktionsschicht;
b) Aufbringen einer Kunststoffmasse (12) in einer vorgegebenen dreidimensionalen Form auf die Folienlage (11) mittels eines dreidimensionalen Druckverfahrens, so dass die Folienlage eine Oberflächenbeschichtung des Formkörpers bildet, **dadurch gekennzeichnet, dass** als Folienlage (11) eine Transferfolie verwendet wird, welche eine Übertragungslage (112) und eine davon ablösbare Trägerschicht (111) aufweist, wobei die Kunststoffmasse (12) in Schritt b) auf die Übertragungslage (112) aufgebracht wird.

2. Verfahren nach Anspruch 1,
**dadurch gekennzeichnet,**
**dass** eine Folienlage (11) verwendet wird, die eine Haftvermittlerschicht aufweist, auf welche in Schritt b) die Kunststoffmasse (12) aufgebracht wird.

3. Verfahren nach Anspruch 2,
**dadurch gekennzeichnet,**
**dass** eine Folienlage (11) verwendet wird, deren Haftvermittlerschicht aus dem gleichen Kunststoffmaterial besteht wie die in Schritt b) aufgebrachte Kunststoffmasse (12).

4. Verfahren nach Anspruch 2,
**dadurch gekennzeichnet,**
**dass** eine Folienlage (11) verwendet wird, deren Haftvermittlerschicht einen wärmeaktivierbaren Klebstoff aufweist.

5. Verfahren nach einem der Ansprüche 2 bis 4,
**dadurch gekennzeichnet,**
**dass** eine Folienlage (11) verwendet wird, deren Haftvermittlerschicht eine Schichtdicke von 0,01 µm bis 50 µm, bevorzugt von 5 µm bis 50 µm aufweist.

6. Verfahren nach einem der vorhergehenden Ansprüche,
**dadurch gekennzeichnet,**
**dass** eine Folienlage (11) verwendet wird, welche zumindest eine dekorative Schicht aufweist, welche eine der folgenden Schichten oder eine Kombination daraus ist oder umfasst: eine Schicht mit zumindest einem Farbmittel, Pigment, einem im sichtbaren, infraroten oder ultraviolettem Spektralbereich zur Fluoreszenz und/oder Lumineszenz anregbarem Pigment, einem optisch variablem Pigment, eine Flüssigkristallschicht, eine cholesterische Flüssigkristallschicht, eine Metallschicht, eine Schicht mit einer Reliefstruktur, insbesondere einer diffraktiven Gitterstruktur, einem Hologramm, einer Mattstruktur, eine Schicht mit einer mikrooptischen Struktur, insbesondere einer Mikrolinsen- und/oder Mikroprismenanordnung, eine Schicht aus einem textilen Material, einem Leder, einem Kunstleder oder einem Holzfurnier.

7. Verfahren nach einem der vorhergehenden Ansprüche,
**dadurch gekennzeichnet,**
**dass** eine Folienlage (11) verwendet wird, welche zumindest eine Funktionsschicht aufweist, welche eine mechanische und/oder thermische und/oder chemische Schutzschicht und/oder eine magnetische und/oder magnetisierbare Schicht, eine elektrische oder elektronische Schicht, insbesondere eine Schicht umfassend Leiterbahnstrukturen, Antennenstrukturen, elektrische oder elektronische Bauelemente, Sensoren, induktive oder kapazitive Berührungssensoren, Chips, Anzeigeelemente, insbesondere OLED- oder LCD-Anzeigeelemente, ist oder umfasst.

8. Verfahren nach einem der vorhergehenden Ansprüche,
**dadurch gekennzeichnet,**
**dass** eine Folienlage (11) verwendet wird, welche ein taktil wahrnehmbares Oberflächenrelief, insbesondere mit einer vorgegebenen Rauhigkeit und/oder mit einer vorgegebenen taktil wahrnehmbaren Information, vorzugsweise in Braille-Schrift, umfasst.

9. Verfahren nach einem der vorhergehenden Ansprüche,
**dadurch gekennzeichnet,**
**dass** nach Aufbringen der Kunststoffmasse (12) in Schritt b) eine weitere Kunststoffmasse in einer vorgegebenen dreidimensionalen Form auf die der in Schritt b) aufgebrachten Kunststoffmasse (12) abgewandten Seite der Folienlage (11) mittels eines dreidimensionalen Druckverfahrens aufgebracht wird.

10. Verfahren nach einem der vorhergehenden Ansprüche,
**dadurch gekennzeichnet,**
**dass** vor dem Aufbringen der Kunststoffmasse (12) die Folienlage (11) auf einem Stützelement (5) mit einer vorgegebenen Oberflächengeometrie fixiert wird, insbesondere mittels mechanischer Klemmmittel und/oder durch Vakuumfixierung.

11. Verfahren nach einem der vorhergehenden Ansprüche,
**dadurch gekennzeichnet,**
**dass** vor dem Aufbringen der Kunststoffmasse (12) die Folienlage (11) auf eine Temperatur von etwa 30°C bis etwa 150 °C, bevorzugt auf eine Temperatur von etwa 60°C bis etwa 100 °C erwärmt wird.

12. Verfahren nach einem der vorhergehenden Ansprüche,
**dadurch gekennzeichnet,**
**dass** der Formkörper (1) nach dem Aufbringen der Kunststoffmasse (12) einer Oberflächenbehandlung unterzogen wird, die insbesondere eine Lösemittelbehandlung und/oder eine zumindest partielle Beschichtung, insbesondere eine Nasslackierung und/oder das Auftragen einer Transferfolie, des Formkörpers (1) umfasst.

13. Formkörper (1), insbesondere hergestellt mittels einem Verfahren nach einem der Ansprüche 1 bis 12, welcher eine Folienlage (11) mit einer dekorativen Schicht und/oder einer Funktionsschicht und eine mittels eines dreidimensionalen Druckverfahrens in einer vorgegebenen dreidimensionalen Form auf die Folienlage (11) aufgebrachte Kunststoffmasse (12) umfasst, wobei die Folienlage eine Oberflächenbeschichtung des Formkörpers bildet, **dadurch gekennzeichnet, dass** als Folienlage (11) eine Transferfolie verwendet wird, welche eine Übertragungslage (112) und eine davon ablösbare Trägerschicht (111) aufweist, wobei die Kunststoffmasse auf die Übertragungslage aufgebracht ist.

14. Formkörper (1) nach Anspruch 13,
**dadurch gekennzeichnet,**
**dass** die Kunststoffmasse (12) eine Mehrzahl von Kunststoffen mit unterschiedlichen optischen Eigenschaften umfasst, durch welche insbesondere eine optisch wahrnehmbar Information dargestellt ist, welche insbesondere zumindest ein alphanumerisches Zeichen, ein Symbol, ein Logo, ein geometrisches Muster, insbesondere ein Guillochenmuster, ein Pixelbild und/oder eine Personalisierungsinformation ist oder umfasst, wobei zumindest einer der Kunststoffe mit unterschiedlichen optischen Eigenschaften insbesondere einen Farbstoff, ein Pigment, Nanopartikel, ein optisch variables Pigment, eine thermochrome oder photochrome Substanz, einen Farbstoff oder ein Pigment umfasst, welches im ultravioletten, sichtbaren oder infraroten Spektralbereich detektierbar und/oder zur Fluoreszenz und/oder Phosphoreszenz in diesen Spektralbereichen anregbar ist.

## Claims

1. Method for the production of a moulded article (1), having the steps:
a) providing a film layer (11) with a decorative layer and/or a functional layer;
b) applying a plastic mass (12) in a predetermined, three-dimensional shape to the film layer (11) by means of a three-dimensional printing method, such that the film layer forms a surface coating of the moulded article, **characterised in that** a transfer film is used as the film layer (11), said transfer film having a transfer layer (112) and a carrier layer (111) that can be released therefrom, wherein the plastic mass (12) is applied to the transfer layer (112) in step b).

2. Method according to claim 1,
**characterised in that**
a film layer (11) is used, which has an adhesion promoting layer to which the plastic mass (12) is applied in step b).

3. Method according to claim 2,
**characterised in that**
a film layer (11) is used, the adhesion promoting layer of which consists of the same plastic material as the plastic mass (12) applied in step b).

4. Method according to claim 2,
**characterised in that**
a film layer (11) is used, the adhesion promoting layer of which has a heat-activatable adhesive.

5. Method according to one of claims 2 to 4,
**characterised in that**
a film layer (11) is used, the adhesion promoting layer of which has a layer thickness of from 0.01µm to 50µm, preferably from 5µm to 50µm.

6. Method according to one of the preceding claims,
**characterised in that**
a film layer (11) is used, which has at least one decorative layer that is or comprises one of the following layers or a combination thereof: a layer having at least one colouring agent, pigment, a pigment that can be incited to fluoresce and/or luminesce in the visible, infra-red or ultra-violet spectral range, an optically variable pigment, a liquid crystal layer, a cholesteric liquid crystal layer, a metal layer, a layer having a relief structure, in particular a diffractive grating structure, a hologram, a matt structure, a layer having a micro-optic structure, in particular a microlens and/or microprism arrangement, a layer made from a textile material, a leather, a synthetic leather or a wood veneer.

7. Method according to one of the preceding claims,
**characterised in that**
a film layer (11) is used, which has at least one functional layer that is or comprises a mechanical and/or thermal and/or chemical protective layer and/or a magnetic and/or magnetisable layer, an electric or electronic layer, in particular a layer comprising conductor path structures, antennae structures, electric or electronic structural elements, sensors, inductive or capacitive touch sensors, chips, display elements, in particular OLED or LCD display elements.

8. Method according to one of the preceding claims,
**characterised in that**
a film layer (11) is used, which comprises a tactilely perceptible surface relief, in particular having a predetermined degree of roughness and/or having a predetermined, tactilely perceptible piece of information, preferably in braille script.

9. Method according to one of the preceding claims,
**characterised in that**
after the application of the plastic mass (12) in step b), a further plastic mass in a predetermined, three-dimensional shape is applied to the side of the film layer (11) facing away from the plastic mass (12) applied in step b) by means of a three-dimensional printing method.

10. Method according to one of the preceding claims,
**characterised in that**
before the application of the plastic mass (12), the film layer (11) is fixed on a support element (5) having predetermined surface geometry, in particular by means of mechanical clamping agents and/or by vacuum fixing.

11. Method according to one of the preceding claims,
**characterised in that**
before the application of the plastic mass (12), the film layer (11) is heated to a temperature of from approximately 30°C to approximately 150°C, preferably to a temperature of from approximately 60°C to approximately 100°C.

12. Method according to one of the preceding claims,
**characterised in that**
after the application of the plastic mass (12), the moulded article (1) is subjected to a surface treatment that comprises, in particular, a solvent treatment and/or an at least partial coating, in particular wet varnishing and/or application of a transfer film, of the moulded article (1).

13. Moulded article (1), in particular produced by means of a method according to one of claims 1 to 12, which comprises a film layer (11) having a decorative layer and/or a functional layer, and a plastic mass (12) applied to the film layer (11) by means of a three-dimensional printing method in a predetermined, three-dimensional shape, wherein the film layer forms a surface coating of the moulded article, **characterised in that** a transfer film is used as the film layer (11) which has a transfer layer (112) and a carrier layer (111) that can be released therefrom, wherein the plastic mass is applied to the transfer layer.

14. Moulded article (1) according to claim 13,
**characterised in that**
the plastic mass (12) comprises a plurality of plastics having different optical properties, by which, in particular, an optically perceptible piece of information is depicted, which is or comprises in particular at least one alphanumerical character, a symbol, a logo, a geometric pattern, in particular a guilloche pattern, a pixel image and/or a piece of personalisation information, wherein at least one of the plastics having different optical properties comprises in particular a colouring agent, a pigment, a nanoparticle, an optically variable pigment, a thermochromic or photochromic substance, a colouring agent or a pigment that can be detected in the ultra-violet, visible or infra-red spectral range, and/or can be incited to fluoresce and/or phosphoresce in these spectral ranges.

## Revendications

1. Procédé de fabrication d'un corps de formage (1) avec les étapes de :
a) mise à disposition d'une couche de film (11) avec une couche décorative et/ou une couche fonctionnelle ;
b) application d'une masse de matière plastique (12) dans une forme tridimensionnelle prédéfinie sur la couche de film (11) au moyen d'un procédé d'impression tridimensionnel, de sorte que la couche de film forme un revêtement de surface du corps de formage, **caractérisé en ce qu'**un film de transfert est utilisé en tant que couche de film (11), lequel présente une couche de transfert (112) et une couche support (111) qui en est détachable, dans lequel la masse de matière plastique (12) est appliquée dans l'étape b) sur la couche de transfert (112).

2. Procédé selon la revendication 1,
**caractérisé en ce**
**qu'**une couche de film (11) est utilisée, qui présente une couche d'agent adhésif, sur laquelle la masse de matière plastique (12) est appliquée dans l'étape b).

3. Procédé selon la revendication 2,
**caractérisé en ce**
**qu'**une couche de film (11) est utilisée, dont la couche d'agent adhésif se compose du même matériau plastique que la masse de matière plastique (12) appliquée dans l'étape b).

4. Procédé selon la revendication 2,
**caractérisé en ce**
**qu'**une couche de film (11) est utilisée, dont la couche d'agent adhésif présente un adhésif activable à la chaleur.

5. Procédé selon l'une quelconque des revendications 2 à 4,
**caractérisé en ce**
**qu'**une couche de film (11) est utilisée, dont la couche d'agent adhésif présente une épaisseur de couche de 0,01 µm à 50 µm, de préférence de 5 µm à 50 µm.

6. Procédé selon l'une quelconque des revendications précédentes,
**caractérisé en ce**
**qu'**une couche de film (11) est utilisée, laquelle présente au moins une couche décorative, laquelle est ou comprend une des couches suivantes ou une combinaison de celles-ci : une couche avec au moins un colorant, pigment, un pigment pouvant être stimulé dans le domaine spectral visible, infrarouge ou ultraviolet pour la fluorescence et/ou luminescence, un pigment optiquement variable, une couche de cristaux liquides, une couche de cristaux liquides cholestérique, une couche de métal, une couche avec une structure en relief, en particulier une structure de réseau diffractive, un hologramme, une structure mate, une couche avec une structure micro-optique, en particulier un agencement de microlentilles et/ou de micro-prismes, une couche en un matériau textile, un cuir, un similicuir ou un placage de bois.

7. Procédé selon l'une quelconque des revendications précédentes,
**caractérisé en ce**
**qu'**une couche de film (11) est utilisée, laquelle présente au moins une couche fonctionnelle, laquelle est ou comprend une couche de protection mécanique et/ou thermique et/ou chimique et/ou une couche magnétique et/ou magnétisable, une couche électrique ou électronique, en particulier une couche comprenant des structures de pistes conductrices, des structures d'antennes, des composants électriques ou électroniques, des capteurs, des capteurs de contact inductifs ou capacitifs, des puces, des éléments d'affichage, en particulier des éléments d'affichage OLED ou LCD.

8. Procédé selon l'une quelconque des revendications précédentes,
**caractérisé en ce**
**qu'**une couche de film (11) est utilisée, laquelle comprend un relief de surface perceptible tactilement, en particulier avec une rugosité prédéfinie et/ou avec une information prédéfinie perceptible tactilement, de préférence en écriture braille.

9. Procédé selon l'une quelconque des revendications précédentes,
**caractérisé en ce**
**qu'**après l'application de la masse de matière plastique (12) dans l'étape b), une autre masse de matière plastique est appliquée au moyen d'un procédé d'impression tridimensionnel dans une forme tridimensionnelle prédéfinie sur le côté de la couche de film (11) opposé à la masse de matière plastique (12) appliquée dans l'étape b).

10. Procédé selon l'une quelconque des revendications précédentes,
**caractérisé en ce**
**qu'**avant l'application de la masse de matière plastique (12), la couche de film (11) est fixée sur un élément d'appui (5) avec une géométrie de surface prédéfinie, en particulier au moyen de moyens de serrage mécaniques et/ou par fixation sous vide.

11. Procédé selon l'une quelconque des revendications précédentes,
**caractérisé en ce**
**qu'**avant l'application de la masse de matière plastique (12), la couche de film (11) est chauffée à une température d'environ 30 °C à environ 150 °C, de préférence à une température d'environ 60 °C à environ 100 °C.

12. Procédé selon l'une quelconque des revendications précédentes,
**caractérisé en ce**
**que** le corps de formage (1) après l'application de la masse de matière plastique (12) est soumis à un traitement de surface, qui comprend en particulier un traitement au solvant et/ou un revêtement au moins partiel, en particulier un laquage humide et/ou l'application d'un film de transfert, du corps de formage (1).

13. Corps de formage (1), fabriqué en particulier au moyen d'un procédé selon l'une quelconque des revendications 1 à 12, lequel comprend une couche de film (11) avec une couche décorative et/ou une couche fonctionnelle et une masse de matière plastique (12) appliquée dans une forme tridimensionnelle prédéfinie sur la couche de film (11) au moyen d'un procédé d'impression tridimensionnel, dans lequel la couche de film forme un revêtement de surface du corps de formage, **caractérisé en ce qu'**un film de transfert est utilisé en tant que couche de film (11), lequel présente une couche de transfert (112) et une couche support (111) qui en est détachable, dans lequel la masse de matière plastique est appliquée sur la couche de transfert.

14. Corps de formage (1) selon la revendication 13,
**caractérisé en ce**
**que** la masse de matière plastique (12) comprend une pluralité de plastiques avec différentes propriétés optiques, par lesquelles en particulier une information optiquement perceptible est représentée, laquelle est ou comprend en particulier au moins un caractère alphanumérique, un symbole, un logo, un modèle géométrique, en particulier un modèle guilloché, une image pixellisée et/ou une information de personnalisation, dans lequel au moins un des plastiques avec différentes propriétés optiques comprend en particulier un colorant, un pigment, des nanoparticules, un pigment optiquement variable, une substance thermochrome ou photochrome, un colorant ou un pigment, lequel peut être détecté dans le domaine spectral ultraviolet, visible ou infrarouge et/ou stimulé pour la fluorescence et/ou phosphorescence dans ces domaines spectraux.
